# EUROPÄISCHE PATENTSCHRIFT

(11) **EP 0 596 375 B1**
(45) Veröffentlichungstag und Bekanntmachung des Hinweises auf die Patenterteilung: **21.04.1999**
(21) Anmeldenummer: 93117285.2
(22) Anmeldetag: 26.10.1993
(51) Int. Cl.: C08G 18/63, C08G 18/65, C08G 18/76, C08G 18/28, C08G 18/40, C09D 7/12

(54) **Als Rheologie-Beeinflusser geeignete Zusammensetzung, Verfahren zu deren Herstellung und deren Verwendung in Überzugsmitteln**
Rheology-controlling composition, process for its preparation and its use in coatings
Composition pour contrôler la rhéologie, son procédé de préparation et son utilisation dans des revêtements

(30) Priorität: 31.10.1992 DE 4236901
(43) Veröffentlichungstag der Anmeldung: 11.05.1994
(73) Patentinhaber: Herberts Gesellschaft mit beschränkter Haftung, 42285 Wuppertal (DE)
(72) Erfinder: Bederke, Klaus, Dr., D-45549 Sprockhövel (DE); Dahm, Ralf, D-42929 Wermelskirchen (DE); Kerber, Hermann, D-42369 Wuppertal (DE); Schubert, Walter, Dr., D-42349 Wuppertal (DE); Herrmann, Friedrich, D-42117 Wuppertal (DE); Reifferscheidt, Heinz-Walter, D-44803 Bochum (DE)
(74) Vertreter: Türk, Gille, Hrabal

(56) Entgegenhaltungen:
- EP-A- 0 198 519
- EP-A- 0 393 609
- EP-A- 0 435 428

## Beschreibung

Die Erfindung betrifft eine Zusammensetzung, die als Rheologie-Beeinflusser zur Erzeugung ablaufsicherer pigmentierter und nicht-pigmentierter Überzugsmittel, insbesondere für Einbrennsysteme, geeignet ist. Sie betrifft auch die Herstellung der Zusammensetzung, sowie diese enthaltende Überzugsmittel. Durch Forderungen und Verordnungen hinsichtlich des Umweltschutzes und der Arbeitsplatzhygiene mußten die Lösemittel in Überzugsmitteln erheblich reduziert werden. Die Entwicklungsarbeiten konzentrierten sich dabei auf eine Festkörperanhebung (High-Solids) der Überzugsmittel. Dieses Ziel konnte durch Molekulargewichtsreduzierung der Harze erreicht werden. Jedoch weisen derartige Überzugsmittel nach der Applikation, insbesondere beim Einbrennvorgang an senkrechten Flächen, an Kanten und in Sikken eine verstärkte Ablaufneigung ("Läuferbildung", "sagging") auf. Durch Rheologie-Beeinflussung, das heißt Umwandlung der Überzugsmittel mit quasi Newton'schem Fließverhalten in solche mit plastischem oder pseudo-plastischem Fließverhalten kann ein Ablaufen verhindert werden.

So ist es beispielsweise bekannt strukturviskose Anstrichmittel dort zu verwenden, wo dickschichtige Lacksysteme erwünscht sind oder festkörperreiche niedrigmolekulare hitzehärtbare Lacke eingesetzt werden, die verstärkt zum Ablaufen neigen. Es gibt eine Vielzahl von Literatur, die sich mit der Ablaufsicherheit von Einbrennlacken befaßt: z.B. DE 2360019, DE-A-2359923, DE-A- 2359929, DE-A- 2751 761, EP-A-0 192304 und EP-A-0 198519.

Allen gemeinsam ist die Bildung einer Di- oder Polyharnstoffverbindung durch Umsetzung primärer, sekundärer, Mono-, Di-, Polyamine oder Alkoholamine mit Mono-, Di- oder Triisocyanaten in einem Trägerharz, das später dem Lack zugesetzt wird.

Die ablaufstabilisierende Wirkung von Polyharnstoffverbindungen beruht auf der Ausbildung von Wasserstoffbrücken, deren loses Netzwerk den Lackfilm an senkrechten Trägerflächen stabilisiert. Das Netzwerk wird zunächst bei der Spritzapplikation durch Scherung zerstört und nach der Applikation auf dem Substrat wieder zurückgebildet (aufgebaut).

Voraussetzung für diesen Effekt (Ablaufsicherheit) ist das Vorliegen der Polyharnstoffe in Teilchenform. Für eine gleichbleibende konstante Wirkungsweise ist die Teilchengröße wichtig, die erzeugt wird durch hohe Rührgeschwindigkeit mit speziellen Rührern und Dosiereinrichtungen. Einfache langsam laufende Rührwerke, wie sie in der Kunstharzherstellung verwendet werden sind hierfür ungeeignet (EP-A-0 192 304). Ein anderer Nachteil ist, daß nicht alle lacküblichen, insbesondere polare Lösemittel verwendet werden können, ohne daß die Ablaufsicherheit negativ beeinfluß wird, z.B. Monoalkohole wie n-Butanol (EP-A-0 192304).

Ein gravierender Nachteil, der sich beim Einsatz der bekannten Polyharnstoffe ergibt, sind Schleier in eingebrannten Lackfilmen, insbesondere dann, wenn man die Ablaufverhinderer in Klarlacken verwendet. Vielfach werden keine glatten Filmoberflächen erhalten, sondern Oberflächen mit Stippen, einer Mikrostruktur oder matte Oberflächen, was einen verringerten Glanz und verringerte Brillanz zur Folge hat.

Aufgabe der Erfindung ist daher die Bereitstellung von Überzugsmitteln, die eine hohe Ablaufsicherheit aufweisen und dennoch zu glatten, einwandfreien Oberflächen führen.

Es hat sich gezeigt, daß diese Aufgabe gelöst werden kann, durch Bereitstellung von Überzugsmitteln, die einen Rheologie-Beeinflusser enthalten, der nicht auf den bekannten Di- oder Polyharnstoffverbindungen basiert, sondern auf Monoharnstoffverbindungen, die auf einer stark hydroxyfunktionellen Acryldispersion, die vorher in einem Acryl- oder Polyesterharz hergestellt wurde, fixiert werden.

Einen Gegenstand der Erfindung bilden daher Überzugsmittel, die eine als Rheologie-Beeinflusser geeignete Zusammensetzung enthalten, die einen weiteren Gegenstand der Erfindung bildet. Die erfindungsgemäße Zusammensetzung, die als Rheologie-Beeinflusser für Überzugsmittel geeignet ist, wird im folgenden als "Rheologie-Beeinflusser" bezeichnet. Der erfindungsgemäße Rheologie-Beeinflusser enthält ein Gemisch, das hergestellt wurde durch Vorlage von
B) einer hydroxyfunktionellen Mikrodispersion die dadurch hergestellt wurde, daß man eine Lösung von
   a) 15 - 85 Gew.-% eines oder mehrerer filmbildender hydroxyl- und/oder carboxylgruppenhaltiger Polyester und/oder carboxylgruppenhaltiger (Meth)acryl-Copolymerisate, wobei bis zur Hälfte der Polyester und/oder (Meth)acryl-Copolymerisat Moleküle jeweils mit einem Molekül Maleinsäure oder Maleinsäurenanhydrid verestert sein kann, vorlegt, und in dieser Vorlage
   b) 85 - 15 Gew.-% eines oder mehrerer radikalisch polymerisierbarer Monomerer auf der Basis von einem oder mehreren Hydroxylalkyl(meth)acrylaten, die im Gemisch mit einem oder mehreren anderen ungesättigten Monomeren vorliegen können, polymerisiert,
   und Vermischen dieser Komponente B mit
A) einem oder mehreren hydroxylgruppenhaltigen (Meth)acryl-Copolymerisaten und/oder einem oder mehreren hydroxylgruppenhaltigen Polyestern, mit einer Hydroxylzahl von 30 - 200 mg KOH/g und einem Carboxylgruppengehalt entsprechend einer Säurezahl von 0 - 50 mg KOH/g,
   und Umsetzung des Gemisches von A) und B) mit
C) 3 - 8 Gew.% eines oder mehrerer Diisocyanate und
D) 2 - 5 Gew.-% eines oder mehrerer aliphatischer primärer Monoamine, die im Gemisch mit einem Teil der Komponente A) oder des löslichen Anteils der Komponente B) vorliegen können,
wobei die Komponenten A) und B) in einem deratigen Anteil vermischt werden, daß die Menge der in den Komponenten A), B) und D) enthaltenen (Meth)acryl-Copolymerisate und/oder Polyester 57 bis 90 Gew.-% und die Menge der in B) enthaltenen Mikroteilchen 5 bis 30 Gew.-% entsprechen,
wobei sich die Gew.-% jeweils auf den Festkörpergehalt beziehen und die Summe der Komponenten A, B, C und D, sowie die Summe der Komponenten a) und b) jeweils 100 Gew.-% beträgt, und die Zusammensetzung außerdem Pigemente, Füllstoffe, lackübliche Additive und/oder Lösemittel enthalten kann.

Gemäß einer bevorzugten Ausführungsform sind die radikalisch polymerisierbaren Monomeren der Komponente b) ein Gemisch von
b1) 80 - 100 Gew.-% eines oder mehrerer Hydroxylalkyl(meth) acrylate
   und
b2) 0 - 20 Gew.-% eines oder mehrerer anderer ungesättigter Monomerer.

Der hier verwendete Ausdruck (Meth)acryl bedeutet Acryl und/oder Methacryl.

Die Herstellung des in dem erfindungsgemäßen Rheologie-Beeinflusser enthaltenen (Meth)acryl-Copolymerisats, Komponente A) und a), kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, S. 24-255 (1961).

Das Lösungspolymerisationsverfahren wird für die Herstellung des im erfindungsgemäßen Rheologie-Beeinflussers eingesetzten (Meth)acryl-Copolymerisats bevorzugt. Bei diesem Verfahren wird das Lösemittel in das Reaktionsgefäß verlegt, auf Siedetemperatur geheizt und das Monomeren/Initiatorgemisch kontinuierlich in einer bestimmten Zeit zudosiert.

Die Polmerisation wird beispielsweise bei Temperaturen zwischen 60°C und 160°C, vorzugsweise bei 80°C bis 140°C, durchgeführt.

Die Polymerisationsreaktion wird mit bekannten Polymerisationsinitiatoren gestartet. Geeignete Initiatoren sind Per- und Azo-Verbindungen, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclohexyl-peroxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylkentonperoxid; Azo-Verbindungen, wie 2,2'-Azo-bis(2,4-dimethylvaleronitril),2,2'-Azo-bis(2-methylbutyronitril),1,1'-Azo-bis-cyclohexancarbonitril, Azo-bis-isobutyronitril.

Bevorzugt werden die Polymerisationsinitiatoren, insbesondere die Perester in einer Menge von 0,2 bis 5 Gew.-% auf die Monomeren-Einwaage, eingesetzt.
Als organische Lösemittel, die zweckmäßigerweise bei der Lösungspolymerisation sowie später auch in dem erfindungsgemäßen Rheologie-Beeinflusser und Überzugsmittel eingesetzt werden, eignen sich beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, n-Propanol, iso-Propanol, n-Butanol, iso-Butanol, sek.Butanol, tert.-Butanol, Hexanol, 2-Ethylhexanol; aromatische Kohlenwasserstoffe, wie Xylol, Solvesso 100 (eingetragenes Warenzeichen) und aliphatische Kohlenwasserstoffe können ebenfalls im Verschnitt mit den oben genannten Lösemitteln eingesetzt werden. Aprotische Lösemittel sind bevorzugt.
Zur Regelung des Molekulargewichts können insbesondere bei der bevorzugten Lösungspolymerisation Kettenüberträger mitverwendet werden. Beispiele sind Mercaptane, Thioglykolsäurester, Chlor-Kohlenwasserstoffe, Cumol, dimeres alpha-Methylstyrol, 3-Oxatetrahydrofuran.
Die Polymerisationsbedingungen (Reaktionstemperatur, Zulaufzeit der Monomerenmischung, Lösungskonzentration) werden so eingerichtet, daß die (Meth)acryl-Copolymerisate für den erfindungsgemäß hergestellten Rheologie-Beeinflusser ein Zahlenmittel der Molmasse (bestimmt durch Gelpermeationschromatographie unter Verwendung von Polystyrol als Eichsubstanz) zwischen 1500 und 30000 aufweisen.
Die hydroxylgruppenhaltign (Meth)acryl-Copolymerisate (Komponente A) und a) des erfindungsgemäß hergestellten Rheologie-Beeinflussers liegen bevorzugt in einem Glasübergangstemperatur-Bereich von -20°C bis +80°C, berechnet aus der Glasübergangstemperatur der Homopolymerisate der einzelnen der in der Literatur angegebenen Monomeren (FOX-Gleichung, s. z.B. polymere Werkstoffe, Batzer, 1985, Seite 307).
Als Monomerkomponenten für die Herstellung des hydroxylgruppenhaltigen (Meth)acryl-Copolymerisats (Komponente A; a); b2)) werden Alkyester der Acrylsäure und/oder Methacrylsäure neben Hydroxyalkylestern der Acrylsäure und/oder Methacrylsäure sowie gegebenenfalls neben weiteren alpha,β-ungesättigten Monomeren und/oder gegebenenfalls Acrylsäure und/oder Methacrylsäure eingesetzt.
Beispiele für Alkylester der Acrylsäure und Methacrylsäure sind: Methylacrylat, Methylmethacrylat, Ethylacrylat, Ethylmethacrylat, Iso-Propylmethacrylat, tert.-Butylacrylat, tert.-Butylmethacrylat, n-Butylacrylat, n-Butylmethacrylat, Iso-Butylacrylat, Iso-Butylmethacrylat, Cyclohexylmethacrylat, Trimethylcyclohe-xylmethacrylat, 2-Ethylhexylacrylat, 2-Ethylhexylmethacry-lat, Laurylacrylat, Laurylmethacrylat, Stearylacrylat, Stearylmethacrylat,Isobornylacrylat, Isobornylmethacrylat.
Beispiele für Hydroxyalkylester der Acrylsäure oder Methacrylsäure sind: β-Hydroxyethylacrylat, β-Hydroxyethylmethacrylat, β-Hydroxypropylacrylat, β-Hydroxypropylmethacrylat, Butandiol-1,4-monoacrylat, Butandiol-1,4-monomethacrylat, Hexandiol-1,6-monoacrylat, Hexandiol-1,6-monomethacrylat. Derartige Hydroxyalkylester sind auch als Komponente b1) geeignet. Ferner können Umsetzungsprodukte aus einem Mol Hydroxyalkyl-(meth)acrylat mit Caprolacton verwendet werden oder Reaktionsprodukte aus (Meth)acrylsäure mit Glycidylestern aliphatischer alpha,alpha'-disubstituierter Monocarbonsäuren.
Comonomere, die gegebenenfalls mit den vorstehend genannten Acrylsäure- und Methacrylsäurealkyl- und -hydroxyalkylestern eingesetzt werden können, sind beispielsweise Styrol und Styrolderivate, Vinylester, wie z.B. Vinylacetat, Vinylpropionat, Vinylversatat. Derartige alpha,β-ungesättigte Monomere können gegebenenfalls bis zu 50 Gew.-% bezogen auf das Gesamtgewicht der Monomeren, eingesetzt werden.

Zur Ausstattung des (Meth)acryl-Copolymerisats mit Carboxyl-Gruppen können (Meth)acrylsäure oder Umsetzungsprodukte aus Hydroxyalkyl-(meth)acrylaten mit Dicarbonsäure-Halbestern in derartigen Mengen einpolymerisiert werden, daß eine Säurezahl von 0 bis 50, beispielsweise 1 bis 50, bevorzugt 5 bis 30 mg KOH/g resultiert.

Die als Komponente A) eingesetzten Polyester stellen Polykondensationsprodukte dar aus mehrwertigen Polycarbonsäuren oder deren Anydriden und mehrwertigen Polyolen, eventuell unter Verwendung von Monocarbonsäuren. Derartige Polyester werden werden bevorzugt mit einem Alkohol-Überschuß hergestellt. Die OH-Zahlen liegen bei 30 bis 200, vorzugsweise bei 60 bis 160 mg KOH/g, die Säurezahlen bei 0 bis 50 mg KOH/g. Bei der Herstellung der Polyester kann jedoch auch so vorgegangen werden, daß freie Carboxylgruppen entsprechend einer Säurezahl von 1 bis 50, bevorzugt 5 bis 30 erhalten bleiben. Dies kann z.B. dadurch erzielt werden, daß nicht voll durchverestert wird, oder daß carboxylgruppenhaltige Monomere verwendet werden, z.B. Dihydroxycarbonsäuren, wie Dimethylolpropionsäure oder Tricarbonsäuren. Die zahlenmittleren Molekulargewichte betragen 1000 bis 6000, vorzugsweise 1000 bis 3000 g/Mol.

Als Beispiele für geeignete Polycarbonsäuren seien o-Phthalsäure-(anhydrid), Isophthalsäure, Terephthalsäure, Tetra-, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Bernsteinsäure(anhydrid), Glutarsäure, Adipinsäure, Acelainsäure, Sebacinsäure, Dodecandisäure, Dimer-Fettsäure genannt.
Die Polyester können auch geringe Anteile an Maleinsäure oder Maleinsäureanhydrid enthalten. Gegebenenfalls können zusammen mit den oben genannten Polycarbonsäuren auch natürliche und synthetische Monocarbonsäuren eingesetzt werden, wie z.B. Benzoesäure, tert.-Butylbenzoesäure, Laurinsäure, Isononansäure und Fettsäuren aus natürlich vorkommenden Ölen.
Beispiele für geeignete Alkoholkomponenten zur Herstellung der Polyester sind Ethylenglykol, Diethylenglykol, Triethylenglykol, Polyethylenglykole, Propandiole, Polypropylenglykole, Butandiole, Hexandiole, Neopentylglykol, Cyclohexandiol, Cyclohexandimethanol, Trimethylpentandiol, Ethylbutylpropandiol, Trimethylolethan, Trimethylolpropan, Ditrimethylolpropan, Glycerin, Pentaerythrit, Dipentaerythrit, Trishydroxyethylisocyanurat.
Die Polyester können als Modifizierungskomponente Glycidylester von alpha,alpha'-disubstituierten Monocarbonsäuren und epsilon-Caprolacton enthalten.

Die erfindungsgemäßen Dispersionen können z.B. hergestellt werden durch Bildung einer dispersen Phase aus unvernetzten (Meth)acryl-Copolymeren (Komponente b) in einem gelösten filmbildenden hydroxyl- und/oder carboxylgruppenhaltigen Polyester und/oder hydroxyl- und carboxylgruppenhaltigen (Meth)acryl-Copolymerisat als Vorlage, Komponente a).
Als Komponente a) geeignete Polyester sind beispielsweise Veresterungsprodukte aus aliphatischen und/oder cycloaliphatischen Polyolen und aliphatischen, cycloaliphatischen und/oder aromatischen Polycarbonsäuren, wie sie für lacktechnische Zwecke üblich sind.
Die Polyester, die für die Herstellung der hydroxylgruppenhaltigen Dispersion verwendet werden, können beispielsweise eine Hydroxylzahl von etwa 30 bis 200, bevorzugt 60 bis 160, und beispielsweise eine Säurezahl von etwa 1 bis 50, vorzugsweise 5 bis 30, aufweist.
Das Zahlenmittel des Molekulargewichts (Mn) beträgt günstig etwa 1000 bis 6000, bevorzugt 1000 bis 3000. Die hydroxyl- und carboxylgruppenhaltigen (Meth)acryl-Copolymerisate, die als Komponente b) eingesetzt werden können, weisen zweckmäßig ein Zahlenmittel des Molekulargewichts (Mn) von etwa 1500 bis 30000 auf. Die Hydroxylzahl liegt zweckmäßig bei z.B. 30 bis 200 und die Säurezahl liegt beispielsweise bei 1 bis 50. Es handelt sich um für Lackzwecke übliche Copolymerisate, die z.B. erhältlich sind durch radikalische Copolymerisation von alpha,β-olefinisch ungesättigten Monomeren mit Acrylsäure, Methacrylsäure und deren Derivaten, wie Ester mit aliphatischen Alkoholen mit C₁ - C₁₈. Beispiele für die alpha,β-ungesättigten Monomeren sind solche, wie sie nachstehend für die Komponente B) angegeben werden.

Bis zur Hälfte der Moleküle (also bis zu 50 %, bezogen auf das Zahlenmittel des Molekulargewichts) sowohl des Polyesters als auch des (Meth)acryl-Copolymerisats der Komponente a) können jeweils mit einem Molekül Maleinsäure oder Maleinsäureanhydrid verestert sein. Bevorzugt liegt eine Veresterung mit Maleinsäure vor, wenn sich das Zahlenmittel des Molekulargewichts (Mn) der Polyester- bzw. (Meth)acrylat-Matrix im unteren angegebenen Bereich bewegt, also bei den (Meth)acryl-Copolymerisaten im Bereich von 1500 bis 30000. Dabei sind bevorzugt bis zu 50 % der Moleküle in der Form der Maleinsäureester. Bevorzugt liegen die Halbester der Maleinsäure vor, wie sie z.B. durch Umsetzung der hydroxylgruppenhaltigen Polyester- bzw. (Meth) acryl-Copolymerisat-Matrix mit einer derartigen Menge an Maleinsäureanhydrid erhalten werden, daß maximal nur die Hälfte der Moleküle reagieren kann.

Hauptbestandteil der dispersen Phase (Komponente b) sind Hydroxylalkylester der Acrylsäure und Methacrylsäure.

Die Herstellung der erfindungsgemäß eingesetzten hydroxylgruppenhaltigen Dispersion erfolgt durch radikalische Polymerisation.

Die hydroxylgruppenhaltige und carboxylgruppenhaltige Bindemittelmatrix (Polyester und/oder (Meth)acryl-Copolymerisat) wird in solvatisierter (gelöster) Form in das Reaktionsgefäß vorgelegt, auf Reaktionstemperatur geheizt und das Monomeren/Initiatorgemisch der dispersen Phasen wird kontinuierlich innerhalb von z.B. 2 bis 8 Stunden, vorzugsweise innerhalb von 2 bis 6 Stunden, zudosiert.

Im Falle der Halbesterbildung mit Maleinsäure wird vor der Zugabe des Monomeren/Initiator-Gemisches mit der entsprechenden Menge an Maleinsäureanhydrid versetzt und durch Erhitzen auf z.B. 100 bis 120°C verestert.

Die Polymerisation wird beispielsweise bei Temperaturen zwischen 60°C und 160°C, vorzugsweise bei 100°C bis 130°C durchgeführt.

Die Herstellung der Komponente B) erfolgt in einer Lösung der Komponente a) in einem organischen Lösemittel,bevorzugt in einem aprotischen Lösemittel. Zur Auflösung bzw. Solvatisierung der Bindemittelmatrix (Komponente a) können beispielsweise solche eingesetzt werden, wie sie später auch für die aus den erfindungsgemäßen Rheologie-Beeinflussern hergestellten Überzugsmitteln eingesetzt werden. Es handelt sich um übliche organische Lösemittel, wie beispielsweise Glykolether, wie Ethylenglykoldimethylether; Glykoletherester, wie Ethylglykolacetat, Butylglykolacetat, 3-Methyloxy-n-butylacetat, Butyldiglykolacetat, Ethoxypropylacetat, Methoxypropylacetat: Ester, wie Methylacetat, Ethylacetat, Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Toluol, o-, m-, p-Xylol, Ethylbenzol, SOLVESSO 100° (Gemisch aromatischer Kohlenwasserstoffe mit einem Siedebereich von 153 - 180°C); Alkohole, wie Methanol, Ethanol, n-Propanol, iso-Propanol, n-Butanol, iso-Butanol, sek.-Butanol, tert.-Butanol, Hexanol, 2-Ethylhexanon und aliphatische Kohlenwasserstoffe, wie Heptan, White Spirit (Testbenzin mit einem Siedebereich von 144 - 165°C) können ebenfalls anteilig mit den oben genannten Lösemitteln eingesetzt werden.

Bei der Herstellung der Komponente B) in der vorgelegten Komponente a) können zur Regelung des Molekulargewichts Kettenübertragungsmittel mitverwendet werden. Geeignet sind übliche Kettenüberträger, wie beispielsweise Mercaptane, Thioglykolsäureester und Chlorkohlenwasserstoffe u.a.

Die Polymerisationsbedingungen (Reaktionstemperatur, Dosierzeit der Monomerenmischung, Initiatorart und -menge, Lössungskonzentration, Lösemittel-Komposition) werden so gewählt, daß es zu einer störungsfreien Ausbildung der Polymermikroteilchen kommt.

Die Teilchengröße der dispersen Phase, gemessen durch Photonen-Correlations-Spektroskopie, liegt bevorzugt im Bereich von 50 bis 800 nm, vorzugsweise bei 200 bis 500 nm.

Bevorzugt wird als Komponente B eine hoch hydroxylgruppenhaltige Mikrodispersion eingesetzt, in der die Mikroteilchen eine Hydroxylzahl von mindestens 300 mg KOH/g, eine Säurezahl von 1 - 50 mg KOH/g aufweisen.

Bevorzugt liegt die disperse Phase der erfindungsgemäß hergestellten nicht-wäßrigen, hydroxylgruppenhaltigen Dispersion in einem Glasübergangstemperatur-Bereich von -40°C bis +60°C, berechnet aus der in der Literatur angegebenen Glasübergangstemperatur der Homopolymerisate der einzelnen Monomeren (FOX-Gleichung).

Für die Herstellung des Rheologie-Beeinflussers werden bevorzugt aromatische Diisocyanate eingesetzt. Als geeignete Beispiele von Diisocyanaten seien erwähnt: 2,4-, 2,6-Toluylendiisocy-anat und deren Gemische, 4,4'-Diphenylmethandiisocyanat, m-Phenylen-, p.Phenylen-diisocyanat, 4,4'-Diphenyl-diisocyanat, 1,5-Naphtalin-diisocyanat, 4,4'-Toluidin-diisocyanat und Xylylen-diisocyanat. Bevorzugt werden 2,4-, 2,6-Toluy-lendiisocyanat und deren Gemische eingesetzt.

Für die Umsetzung des aromatischen Diisocyanats mit aliphatischen primären Monoaminen zur Ausbildung von disubstituierten Harnstoffen werden beispielsweise solche mit 4 bis 18, insbesondere 8 bis 12 Kohlenstoffatomen im Molekül, wie n-Butyl-, n-Hexyl-, n-Octyl-, n-Decyl-, n-Dodecyl- und n-Stearylamin verwendet. Bevorzugt wird n-Octylamin eingesetzt.

Die Herstellung des Rheologie-Beeinflussers erfolgt beispielsweise in kühl- und beheizbaren Reaktionsgefäßen, die mit einem Rührwerk, Thermometer und Rückflußkühler ausgerüstet sind unter Vorlage eines oder mehrerer gelösten hydroxylgruppenhaltiger (Meth)acryl-Copolymersate und oder eines oder mehrerer hydroxylgruppenhaltiger Polyester, einer hoch hydroxylfunktionellen Mikrodispersion und Zugabe eines aromatischen Diisocyanats bei Temperaturen von 20 bis 40°C, vorzugsweise 30°C. Die Reaktion der NCO-Gruppen mit Hydroxylgruppen der Bindemittel-Matrix wird solange durchgeführt, bis etwa 50 % der ursprünglich verfügbaren NCO-Gruppen umgesetzt sind, gemessen über die NCO-Zahl der Reaktionsmischung. Danach wird eine Mischung aus aliphatischen primären Monoamin und einem hydroxylgruppenhaltigen Bindemittel kontinuierlich über einen Zeitraum von 2 bis 5 Stunden, vorzugsweise 3 Stunden zudosiert. Danach wird etwa 2 Stunden nachreagiert und mit lacküblichen Lösemitteln auf die gewünschte Verarbeitungskonzentration verdünnt. Bei den Lösemitteln kann es sich beispielsweise um solche handeln, wie zur Herstellung der Komponenten A) und B) beschrieben wurden, einschließlich aprotischer.

Zur Herstellung der erfindungsgemäßen Überzugsmittel können die erfindungsgemäßen Rheologie-Beeinflusser zusammen mit üblichen hydroxylgruppenhaltigen Bindemitteln eingesetzt werden. Beispiele für verwendbare hydroxylgruppenhaltige Bindemittel sind übliche Filmbildner, beispielsweise auf der Basis von hydroxylgruppenhaltigen (Meth)acryl-Copolymerisaten, hydroxylgruppenhaltigen Polyestern, hydroxylgruppenhaltigen Polyurethanen, hydroxylgruppenhaltigen Epoxidharzen, wie sie dem Fachmann geläufig sind. Als Bindemittel können gänzlich oder teilweise auch ein oder mehrere der gleichen hydroxylgruppenhaltigen (Meth)acryl-Copolymerisate und/oder hydroxylgruppenhaltigen Polyester, wie sie für die Komponente A) des erfindungsgemäßen Rheologie-Beeinflussers eingesetzt werden, Verwendung finden. Die Überzugsmittel können in üblicher Weise formuliert werden mit Vernetzungsmitteln, wie Aminoplastharzen oder Polyisocyanaten oder Prepolyisocyanaten.

Zu geeigneten Aminoplastharzen zählen alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Formaldehyd und durch die Art des verwendeten Verätherungsalkohols. Das Mengenverhältnis des verwendeten Aminoplastharzes zum restlichen Bindemittelanteil (einschließlich des Rheologie-Beeinflussers) beträgt 20 : 80 bis 40 : 60 (fest auf fest gerechnet).

Der Anteil an Polyisocyanat-Vernetzer wird bevorzugt so gewählt, daß auf eine Hydroxyl-Gruppe der Bindemittel-Komponenten 0,5 bis 1,5 Isocyanat-Gruppen entfallen. Überschüssige Isocyanat-Gruppen können durch Feuchtigkeit abreagieren und zur Vernetzung beitragen. Es können aliphatische, cycloaliphatische und aromatische Polyisocyanate verwendet werden wie Hexamethylendiisocyanat, Trimethylhexamethylendiisocyanat, Isophorondiisocyanat, 4,4'-Diisocyanato-dicyclohexylmethan, Toluylen-2,4-Diisocyanat,o-,m- und p-Xylylendiisocyanat, 4,4'-Diisocyanto-diphenylmethan; mit CH-, NH- oder OH-aciden Verbindungen verkappte Polyisocyanate; Biuret-, Allophanat-, Urethan- oder Isocyanurat-Gruppen enthaltende Polyisocyanate.

Beispiele für derartige Polyisocyanate sind ein Biuret-Gruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N® BAYER AG); ein Isocyanuratgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390® BAYER AG); oder Urethangruppen enthaltende Polyisocyanat, welche Reaktionsprodukte darstellen aus 3 Molen Toluylendiisocyanat und 1 Mol Trimethylolpropan mit einem NCO-Gehalt von etwa 17,5 % (entsprechend dem Handelsprodukt Desmodur L® BAYER AG). Bevorzugt eingesetzt werden Desmodur NR und Desmodur N 3390.

Die Überzugsmittel, welche den erfindungsgemäß einzusetzenden Rheologie-Beeinflusser enthalten, können neben den bereits genannten Lösemitteln zusätzlich lackübliche Additive enthalten, z.B.: Verlaufmittel auf der Basis von (Meth)acryl-Homopolymerisaten, Silikonöle, Weichmacher wie Phosphorsäure-, Phthalsäure- oder Zitronensäureester, Antiabsetzmittel, wie Montmorillonit, pyrogenes Siliziumoxid, hydriertes Ricinusöl. Härtungsbeschleuniger für die Umsetzung des erfindungsgemäßen Rheologie-Beeinflussers mit Aminoplastharzen oder Polyisocyanatharzen: Phosphorsäure, Phosphorsäureester, Dicarbonsäure-Halbester, Zitronensäure; organische Metallsalze, wie Dibutylzinndilaurat, Zink-Naphthenat, ferner tertiäre Aminogruppen enthaltende Verbindungen wie Triethylamin.

Für die Herstellung der Überzugsmittel, die den erfindungsgemäßen Rheologie-Beeinflusser enthalten, können Pigmente und Füllstoffe verwendet werden. Es können lackübliche transparente oder deckende anorganische und/oder organische Farbpigmente eingesetzt werden. Zusätzlich können auch Füllstoffe eingesetzt werden.

Bevorzugt enthalten die erfindungsgemäßen Überzugsmittel 5-60 Gew.-% des erfindungsgemäßen Rheologie-Beeinflussers.

Die Applikation der erfindungsgemäßen Überzugsmittel kann nach üblichen Verfahren erfolgen, z.B. durch Handspritzen, Spritzen mit dem Automaten oder elektrostatische Applikation (ESTA).

Die erfindungsgemäßen Überzugsmittel weisen den Vorteil auf, daß sie zu Überzügen führen, die eine besonders gute Ablaufsicherheit von Klar- und Decklackschichten aufweisen, insbesondere bei Einbrennprozessen.

Die folgenden Beispiele dienen zur Erläuterung der Erfindung.

In den Beispielen wird die Wirksamkeit der erfindungsgemäß eingesetzten Rheologie-Beeinflusser durch einen im nachfolgenden beschriebenen praxisnahen Ablauf-Test überprüft. Bei diesem Test wird der spritzfertige Naßlack auf ein senkrecht stehendes Lochblech in einem Keil gleichmäßig von oben nach unten gespritzt und nach einer festgelegten Ablüftzeit hängend in einem Einbrennofen gehärtet. Die Spritzapplikation erfolgt durch Handspritzen, mit dem Automaten oder mit der ESTA. Die Lackierung kann sowohl auf blankem Lochblech als auch in einem Lackaufbau vorgenommen werden. Beim Lakkierauftrag kommt es an den Lochkanten zur Läuferbildung.

Die Auswertung erfolgt durch Messung der Läuferlänge (mm) bei der entsprechenden Lackfilm-Schichtdicke (µm). Die Läuferlänge korreliert mit der Schichtdicke, und zwar nimmt die Läuferlänge überproportional mit der Schichtdicke zu. Da die gemessenen Wertepaare immer mit einem Fehler behaftet sind und die Angabe einer Ablauf-Charakteristik für eine Versuchsreihe schwierig erscheint, bietet sich eine statistische Auswertung in Form einer Regressionsanalyse an. Dabei kann der Zusammenhang zwischen den quantitativen Merkmalen Läuferlänge (L) und Schichtdicke (S) durch die Potenzfunktion: L = f(S) = a · S^{b} mit dem Definitionsbereich: 1 ≥ b > 0 Λ b ε IR gut beschrieben werden.

### Herstellung von (Meth)acrylcopolymerisaten

### Herstellungsbeispiel 1

In einem 2-Liter-Dreihalskolben, ausgerüstet mit Rührer, Thermometer, Kondensator und Tropftrichter, werden 300 g Xylol und 225 g Solvesso 100 unter Rühren auf eine Rückflußtemperatur von ca. 147°C erhitzt.
Eine Mischung aus 18 g Acrylsäure, 72 g Styrol, 255 g Hydroxypropylmethacrylat, 180 g Methylmethacrylat, 330 g Butylacrylat und 45 g tert.-Butylperbenzoat, wird unter Rückfluß innerhalb von 5 Stunden kontinuierlich zudosiert. Die Siedetemperatur fällt auf 140°C ab. Nach Zulaufende wird das Mischgefäß und der Tropftrichter mit 45 g Solvesso 100 nachgespült.
Der Ansatz wird 3 Stunden bei Rückfluß nachpolymerisiert, dann auf 60°C gekühlt und mit 30 g Solvesso 100 auf einen Festkörper von 60 % eingestellt. Die Viskosität beträgt 580 mPas bei 25°C.

### Herstellungsbeispiel 2

In einem 2-Liter-Dreihalskolben, ausgerüstet mit Rührer, Thermometer, Kondensator und Tropftrichter, werden 375 g Xylol und 150 g Solvesso 100 unter Rühren auf eine Rückflußtemperatur von ca. 144°C erhitzt.

Eine Mischung aus 18 g Acrylsäure, 72 g Styrol, 110 g Hydroxyethylmethacrylat, 217 g Methylmethacrylat, 435 g Butylacrylat und 48 g tert.-Butylperbenzoat, wird unter Rückfluß innerhalb von 5 Stunden kontinuierlich zudosiert. Die Siedetemperatur fällt auf 136°C ab. Nach Zulaufende wird das Mischgefäß und der Tropftrichter mit 45 g Xylol nachgespült. Der Ansatz wird 3 Stunden bei Rückfluß nachpolymerisiert, dann auf 60°C gekühlt und mit 30 g Xylol auf einen Festkörper von 60 % eingestellt. Die Viskosität beträgt 280 mPas bei 25°C

### Herstellungsbeispiel 3

In einem 2-Liter-Dreihalskolben, ausgerüstet mit Kontaktthermometer, Rührer, Kondensator und Tropftrichter, werden 300 g Solvesso 100 unter Rühren auf ca. 148°C erhitzt. Eine Mischung aus 105 g Acrylsäure, 255 g Styrol, 105 g Hydroxyethylacrylat, 210 g Butylacrylat, 360 g Cardura E10® und 90 g tert.-Butylperbenzoat, wird bei 148°C innerhalb von 7 Stunden kontinuierlich zudosiert. Nach Zulaufende wird das Mischgefäß und der Tropftrichter mit 45 g Solvesso 100 nachgespült. Der Ansatz wird 3 Stunden bei 148°C nachpolymerisiert, dann auf 60°C gekühlt und mit 30 g Solvesso 100 auf einen Festkörper von 75 % eingestellt. Die Viskosität beträgt 4800 mPas bei 25°C.

### Herstellungsbeispiel 4

In einem 2-Liter-Dreihalskolben, ausgerüstet mit Thermometer, Rührer, Kondensator und Tropftrichter, werden 429 g Xylol und 30 g Butanol unter Rühren auf eine Rückflußtemperatur von ca. 125°C erhitzt.
Eine Mischung aus 27 g Acrylsäure, 78 g Laurylacrylat, 96 g Butylmethacrylat, 147 g Butandiolmonoacrylat 148,5g Hydroxypropylmethacrylat, 420g tert.-Butylacrylat und 58,5g tert.-Butylperbenzoat, wird unter Rückfluß innerhalb von 4 Stunden kontinuierlich zudosiert. Nach Zulaufende wird das Mischgefäß und der Tropftrichter mit 45 g Xylol nachgespült. Der Ansatz wird 4 Stunden unter Rückfluß nachpolymerisiert, dann auf 60°C gekühlt und mit 21 g Xylol auf einen Festkörper von 65 % eingestellt. Die Viskosität beträgt 940 mPas bei 25°C.

### Herstellung von Polyesterharzen

### Herstellungsbeispiel 5

In einen 2-Liter-Dreihalskolben, ausgerüstet mit Thermometer, Rührer und Kondensator werden 383,0 g Hexandiol-1,6 und 108,9 g Trimethylolpropan vorgelegt und aufgeschmolzen. Dann werden unter Rühren, Heizen und Überleiten von Inertgas 269,4 g Isophthalsäure, 177,8 g Adipinsäure und 59,9 g Phthalsäureanhydrid eingefüllt. Danach wird mit einer Aufheizrate von 20°C/h auf 250°C geheizt. Nach Erreichen einer Säurezahl von ca. 10 wird Vakuum angelegt und auf eine Viskosität von 700 - 800 mPas/25°C (gemessen 70%ig in Xylol) kondensiert. Anschließend wird auf 120°C abgekühlt und mit Xylol auf einen Festkörper von 65 % verdünnt. Der Polyester hat eine Säurezahl von 2,1 und eine Viskosität von 752 mPas/25°C.

### Herstellungsbeispiel 6

In einen 2-Liter-Dreihalskolben, ausgerüstet mit Thermometer, Rührer und Kondensator werden 237,7 g Neopentylglykol, 65,4 g Trimethylolpropan und 10,0 g Diethylenglykol vorgelegt und aufgeschmolzen. Dann werden unter Rühren, Heizen und Überleiten von Inertgas 126,5 g Isophthalsäure, 144,9 g Adipinsäure, 85,2 g Phthalsäureanhydrid und 6,3 g Maleinsäureanhydrid eingefüllt. Danach wird mit einer Aufheizrate von 20°C/h auf 210°C geheizt. Nach Erreichen einer Säurezahl von ca. 8 wird auf 120°C abgekühlt und mit Xylol auf einen Festkörper von 65 % verdünnt. Der Polyester hat eine Säurezahl von 5,2 und eine Viskosität von 446 mPas/25°C.

### Herstellung von Mikrodispersionen

### Herstellungsbeispiel 7

In einem 2-Liter-Dreihalskolben, ausgerüstet mit Kontaktthermometer, Rührer, Kondensator und Tropftrichter, werden 720 g des (Meth)acrylcopolymerisats von Herstellungsbeispiel 1, 4,8 g Maleinsäureanhydrid und 72 g Solvesso 100 unter Rühren auf 116°C erhitzt.
Eine Mischung aus 180 g Hydroxyethylacrylat, 38,4 g tert.-Butylacrylat, 72 g Solvesso 100 und 4,8 g tert.-Butylperoxy-2-ethylhexanoat wird bei 116°C innerhalb von 2 Stunden kontinuierlich zudosiert. Nach Zulaufende wird das Mischgefäß und der Tropftrichter mit 36 g Solvesso 100 nachgespült.
Der Ansatz wird 2 Stunden bei 116°C nachpolymerisiert, dann auf 60°C abgekühlt und mit 72 g Solvesso 100 auf einen Festkörper von 55 % eingestellt. Die Viskosität beträgt 600 mPas bei 25°C.

### Herstellungsbeispiel 8

In einem 2-Liter-Dreihalskolben, ausgerüstet mit Kontaktthermometer, Rührer, Kondensator und Tropftrichter, werden 540 g des (Meth)acrylcopolymerisats von Herstellungsbeispiel 3, 4,8 g Maleinsäureanhydrid und 144 g Xylol unter Rühren auf 118°C erhitzt.
Eine Mischung aus 198 g Hydroxyethylacrylat, 48 g tert.-Butylacrylat, 92,4 g Xylol, 3,6 g tert.-Butyl-peroxy-2-ethylhexanoat und 1,2 g tert.-Butylperbenzoat wird bei 118°C innerhalb von 2,5 Stunden kontinuierlich zudosiert. Nach Zulaufende wird das Mischgefäß und der Tropftrichter mit 48 g Xylol nachgespült.
Der Ansatz wird 3 Stunden bei 118°C nachpolymerisiert, dann auf 60°C gekühlt und mit 120 g Xylol auf einen Festkörper von 55 % eingestellt. Die Viskosität beträgt 820 mPas bei 25°C.

### Herstellungsbeispiel 9

In einem 2-Liter-Dreihalskolben, ausgerüstet mit Kontaktthermometer, Rührer, Kondensator und Tropftrichter, werden 739,2 g des Polyesterharzes von Herstellungsbeispiel 6, 9 g Maleinsäureanhydrid, 24 g Butylacetat und 40,8 g Xylol unter Rühren auf 116°C erhitzt.
Eine Mischung aus 285,6 g Hydroxyethylacrylat, 36 g Butylacetat und 4,8 g tert.-Butyl-peroxy-2-ethylhexanoat wird bei 116°C innerhalb von 2,5 Stunden kontinuierlich zudosiert.
Nach Zulaufende wird das Mischgefäß und der Tropftrichter mit 30 g Butylacetat nachgespült. 15 Minuten nach Zulaufende werden 0,6 g Trigonox 21 zugegeben.
Der Ansatz wird 2 Stunden bei 116°C nachpolymerisiert, dann auf 60°C gekühlt und mit 30 g Butylacetat auf einen Festkörper von 65 % eingestellt. Die Viskosität beträgt 550 mPas bei 25°C.

### Herstellung von Rheologie-Beeinflussern

### Beispiel 1

In einem 2-Liter-Dreihalskolben werden unter Rühren 324 g (Meth)acrylcopolymerisat von Herstellungsbeispiel 1, 240 g Mikrodispersion von Herstellungsbeispiel 7 und 144 g Solvesso 100 in einem Wasserbad auf 30°C temperiert.
32,4 g Toluylendiisocyanat werden zugesetzt und bis zu einem NCO-Gehalt von 1,1 % umgesetzt (ca. 90 Minuten). Eine Mischung aus 180 g Xylol, 174 g (Meth)acrylcopolymerisat von Herstellungsbeispiel 1, 18 g Octylamin und 3,3 g Butanol, wird innerhalb von 3 Stunden kontinuierlich zudosiert.
Nach Zulaufende wird das Mischgefäß und der Tropftrichter mit 42 g Xylol nachgespült.
Der Ansatz wird 2 Stunden nachreagiert und mit 42 g Butanol auf einen Festkörper von 40 % eingestellt. Die Viskosität (nach Stehen über Nacht) ist stark thixotrop.

### Beispiel 2

In einem 2-Liter-Dreihalskolben werden unter Rühren 324 g (Meth)acrylcopolymerisat von Herstellungsbeispiel 2, 234 g Mikrodispersion von Herstellungsbeispiel 8 und 156 g Xylol in einem Wasserbad auf 30°C temperiert.
32,4 g Toluylendiisocyanat werden zugesetzt und bis zu einem NCO-Gehalt von 1,1 % umgesetzt (ca. 100 Minuten). Eine Mischung aus 180 g Xylol, 168 g (Meth)acrylcopolymerisat von Herstellungsbeispiel 4 und 18 g Octylamin, wird innerhalb von 3 Stunden kontinuierlich zudosiert.
Nach Zulaufende wird das Mischgefäß und der Tropftrichter mit 42 g Xylol nachgespült.
Der Ansatz wird 2 Stunden nachreagiert und mit 45,6 g Butanol auf einen Festkörper von 40 % eingestellt. Die Viskosität (nach Stehen über Nacht) ist stark thixotrop.

### Beispiel 3

In einem 2-Liter-Dreihalskolben werden unter Rühren 396 g Polyesterharz von Herstellungsbeispiel 5, 198 g Mikrodispersion von Herstellungsbeispiel 4 und 102 g Solvesso 100 in einem Wasserbad auf 30°C temperiert.
32,4 g Toluylendiisocyanat werden zugesetzt und bis zu einem NCO-Gehalt von 1,1 % umgesetzt (ca. 110 Minuten).
Eine Mischung aus 192 g Solvesso 100, 6 g Butanol, 174 g Polyesterharz von Herstellungsbeispiel 5 und 18 g Octylamin, wird innerhalb von 3 Stunden kontinuierlich zudosiert.
Nach Zulaufende wird das Mischgefäß und der Tropftrichter mit 36 g Butylacetat nachgespült.
Der Ansatz wird 2 Stunden nachreagiert und mit 45,6 g Solvesso 100 auf einen Festkörper von 48 % eingestellt. Die Viskosität (nach Stehen über Nacht) ist stark thixotrop.

### Herstellung von Lacken

### Beispiel 4

### (Klarlack mit Rheologie-Beeinflusser von Beispiel 2)

58,3 Gewichtsteile eines niedrigmolekularen hydroxyfunktionellen (Meth)acryl-Copolymerisats mit einem Styrol-Gehalt von 21 %, einer OH-Zahl von 80 mg KOH/g, einer Säurezahl von 20,5, einer Viskosität von 310 mPas/25°C, gelöst 60 %ig in Xylol, wird mit 30,6 Gewichtsteilen eines handelsüblichen Melaminharzes (SETAMINE US-138/70^{R}) und 37,5 Gewichtsteilen des Rheologie-Beeinflussers von Beispiel 2 vermischt, mit 18,0 Gewichtsteilen eines Lösemittelgemisches aus Solvesso 100: n-Butanol = 4 : 1 auf eine Verarbeitungskonsistenz von 30 sec. AK4/20°C eingestellt und auf Lochbleche appliziert.

### Vergleichsversuch A (Klarlack ohne Rheologie-Beeinflusser)

58,3 Gewichtsteile eines niedrigmolekularen hydroxyfunktionellen (Meth)acryl-Copolymerisats mit einem Styrol-Gehalt von 21 %, einer OH-Zahl von 80 mg KOH/g und einer Säurezahl von 20,5 einer Viskosität von 310 mPas/25°C, gelöst 60 %ig in Xylol wird mit 39,9 Gewichtsteilen SETAMINE US-138/70^{R} vermischt, mit 27,0 Gewichtsteilen eines Lösemittelgemisches aus Solvesso 100: n-Butanol = 4 : 1 auf eine Verarbeitungskonsistenz von 30 sek. AK4/20°C eingestellt, (AK4 = Auslaufkonsistenz bei 4 mm - Düse) und auf Lochbleche appliziert.

### Beispiel 5

### (Weißlack mit Rheologie-Beeinflusser von Beispiel 2)

58,3 Gewichtsteile eines niedrigmolekularen hydroxyfunktionellen (Meth)acryl-Copolymerisats mit einem Styrol-Gehalt von 21 %, einer OH-Zahl von 80 mg KOH/g, einer Säurezahl von 20,5, einer Viskosität von 310 mPas/25°C gelöst 60 %ig in Xylol werden mit 34,0 Gewichtsteilen Titandioxid versetzt und unter dem Dissolver auf eine Mahlfeinheit von ca. 10 pm vermahlen. Danach werden 30,6 Gewichtsteile SETAMINE US-138/70^{R} und 37,5 Gewichtsteile des Rheologie-Beeinflussers von Beispiel 2 hinzugefügt, vermischt, mit 30,0 Gewichtsteilen eines Lösemittelgemisches aus Solvesso 100: n-Butanol = 4 : 1 auf eine Verarbeitungskonsistenz von 30 sek. AK4/20°C eingestellt und auf Lochbleche appliziert.

### Vergleichsversuch B (Weißlack ohne Rheologie-Beeinflusser)

58,3 Gewichtsteile eines niedrigmolekularen hydroxyfunktionellen (Meth)acryl-Copolymerisats mit einem Styrol-Gehalt von 21 %, einer OH-Zahl von 80 mg KOH/g und einer Säurezahl von 20,5, einer Viskosität von 310 mPas/25°C gelöst 60 %ig in Xyol werden mit 34,0 Gewichtsteilen Titandioxid versetzt und unter dem Dissolver auf eine Mahlfeinheit von ca. 10 µm vermahlen. Danach werden 39,9 Gewichtsteile SETAMINE US-138/70^{R} hinzugefügt, vermischt, mit 28,0 Gewichtsteilen eines Lösemittelgemisches aus Solvesso 100: n-Butanol = 4 : 1 auf eine Verarbeitungskonsistenz von 30 sek. AK4/20°C eingestellt und auf Lochbleche appliziert.

### Beispiel 6

### (2K-Klarlack mit Rheologie-Beeinflusser von Beispiel 2)

In 82,0 Gewichtsteilen eines hydroxyfunktionellen Styrolfreien (Meth)acryl-Copolymerisats mit einer OH-Zahl von 140 mg KOH/g und einer Säurezahl von 27,6 mg KOH/g, gelöst 50%ig in Solvesso 100 : Methoxypropylacetat : Butylacetat : Xylol = 32 : 6 : 6 : 6, werden 1,0 Gewichtsteile Lichtschutzmittel vom Typ Benztriazol, 1,0 Gewichtsteile eines Lichtschutzmittels vom Typ HALS gelöst. Dazu werden 1,5 Gewichtsteile einer 10%igen Silikonöl-Lösung in Xylol, 5,0 Gewichtsteile Butyldiglykolacetat, 50,0 Gewichtsteile Rheologie-Beeinflusser von Beispiel 2 und 9,5 Gewichtsteile Solvesso 100 gegeben und gut vermischt.

Zu 60,0 Gewichtsteilen des oben beschriebenen Stammlacks werden 12,0 Gewichtsteile einer Härter-Lösung aus 84,6 Gewichtsteilen Desmodur N 3390 ^{R}(BAYER AG), 7,7 Gewichtsteilen Butylacetat und 7,7 Gewichtsteilen Solvesso 100 gegeben, gut vermischt und auf Lochbleche appliziert.

### Vergleichsversuch C (2K-Klarlack ohne Rheologie-Beeinflusser)

In 82,0 Gewichtsteilen eines hydroxyfunktionellen Styrol-freien (Meth)acryl-Copolymerisats mit einer OH-Zahl von 140 mg KOH/g und einer Säurezahl von 27,6 mg KOH/g, gelöst 50%ig in Solvesso 100 : Methoxypropylacetta : Butylacetat : Xylol = 32 : 6 : 6 : 6, werden 1,0 Gewichtsteile Lichtschutzmittel vom Typ Benztriazol, 1,0 Gewichtsteile eines Lichtschutzmittels vom Typ HALS gelöst. Dazu werden 1,5 Gewichtsteile einer 10%igen Silikonöl-Lösung in Xylol, 5,0 Gewichtsteile Butyldiglykolacetat und 9,5 Gewichtsteile Solvesso 100 gegeben und gut vermischt.

Zu 40,0 Gewichtsteilen des oben beschriebenen Stammlacks werden 12,0 Gewichtsteile einer Härter-Lösung aus 84,6 Gewichtsteilen Desmodur N 3390 ^{R}(BAYER AG), 7,7 Gewichtsteilen Butylacetat und 7,7 Gewichtsteilen Solvesso 100 gegeben, gut vermischt und auf Lochblecke appliziert.

### Beispiel 7 (2K-Klarlack mit Rheologie-Beeinflusser von Beispiel 3)

60,0 Gewichtsteile des hydroxyfunktionellen Polyesters von Herstellungsbeispiel 5 werden mit 10,0 Gewichtsteilen des Rheologie-Beeinflussers von Beispiel 3 gut vermischt. Danach wird eine Lösung aus 2,0 Gewichtsteilen Butylacetat, 10,0 Gewichtsteilen Methoxypropylacetat, 4,0 Gewichtsteilen Ethoxypropylacetat, 1,2 Gewichtsteilen Lichtschutzmittel vom Typ Benztriazol, 1,2 Gewichtsteilen eines Lichtschutzmittels vom Typ HALS hergestellt und mit der Stammkomponente vermischt. Dazu werden 1,6 Gewichtsteile einer 10%igen Silikonöl-Lösung in Xylol und 4,0 Gewichtsteile Ethoxypropylacett gegeben.

Zu 75,0 Gewichtsteilen des oben beschriebenen Stammlacks werden 25,0 Gewichtsteile einer Härter-Lösung aus 75,0 Gewichtsteilen Desmodur N/75 MX®, 12,5 Gewichtsteilen Methoxypropylacetat und 12,5 Gewichtsteilen Xylol gegeben, gut vermischt und auf Lochbleche appliziert.

### Vergleichsversuch D (2K-Klarlack ohne Rheologie-Beeinflusser)

Zu 70,0 Gewichtsteilen des hydroxyfunktionellen Polyesters von Herstellungsbeispiel 5 wird eine Lösung aus 2,0 Gewichtsteilen Butylacetat, 10,0 Gewichtsteilen Methoxypropylacetat, 4,0 Gewichtsteilen Ethoxypropylacetat, 1,2 Gewichtsteilen Lichtschutzmittel vom Typ Benztriazol, 1,2 Gewichtsteilen eines Lichtschutzmittels vom Typ HALS und 1,6 Gewichtsteile einer 10%igen Silikonöl-Lösung in Xylol und 4,0 Gewichtsteile Ethoxypropylacetat gegeben.

Zu 75,0 Gewichtsteilen des oben beschriebenen Stammlacks werden 25,0 Gewichtsteile einer Härter-Lösung aus 75,0 Gewichtsteilen Desmodur N/75 MX ^{R}, 12,5 Gewichtsteilen Methoxypropylacetat und 12,5 Gewichtsteilen Xylol gegeben, gut vermischt und auf Lochbleche appliziert.

### Beispiel 8

### (Klarlack mit Rheologie-Beeinflusser von Beispiel 1)

53,8 Gewichtsteile eines hydroxyfunktionellen niedrigmolekularen Styrol-freien (Meth)acryl-Copolymerisats mit einer OH-Zahl von 120 mg KOH/g, einer Säurezahl von 26,9, einer Viskosität von 890 mPas/25°C, gelöst 65%ig in Xylol : n-Butanol = 33 : 2, wird mit 30,6 Gewichtsteilen SETAMINE US-138/79 ^{R} und 37,5 Gewichtsteilen des Rheologie-Beeinflussers von Beispiel 1 vermischt und mit einem Lösemittelgemisch aus Solvesso 100 : n-Butanol = 4 : 1 auf eine Verarbeitungskonsistenz von 30 sek. AK4/20°C eingestellt und auf Lochbleche appliziert.

### Vergleichsversuch E (Klarlack ohne Rheologie-Beeinflusser)

53,8 Gewichtsteile eines hydroxyfunktionellen niedrigmolekularen Styrol-freien (Meth)acryl-Copolymerisats mit einer OH-Zahl von 120 mg KOH/g, einer Säurezahl von 26,9, einer Viskosität von 890 mPas/25°C, gelöst 65%ig in Xylol : n-Butanol = 33,2, wird mit 30,6 Gewichtsteilen SETAMINE US-138/70 ^{R} vermischt und mit einem Lösemittelgemisch aus Solvesso 100 : n-Butanol = 4 : 1 auf eine Verarbeitungskonsistenz von 30 sek. AK4/20°C eingestellt und auf Lochbleche appliziert.

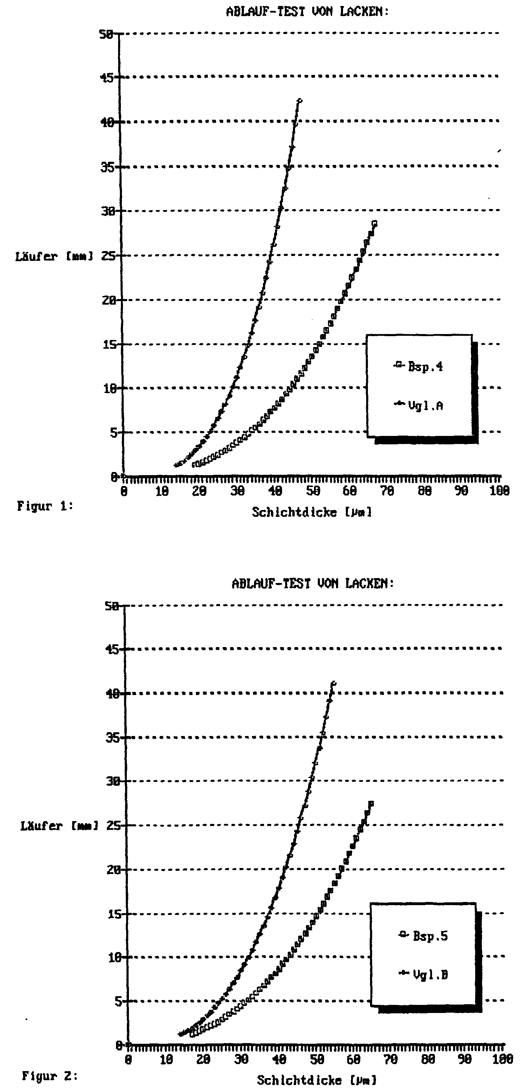

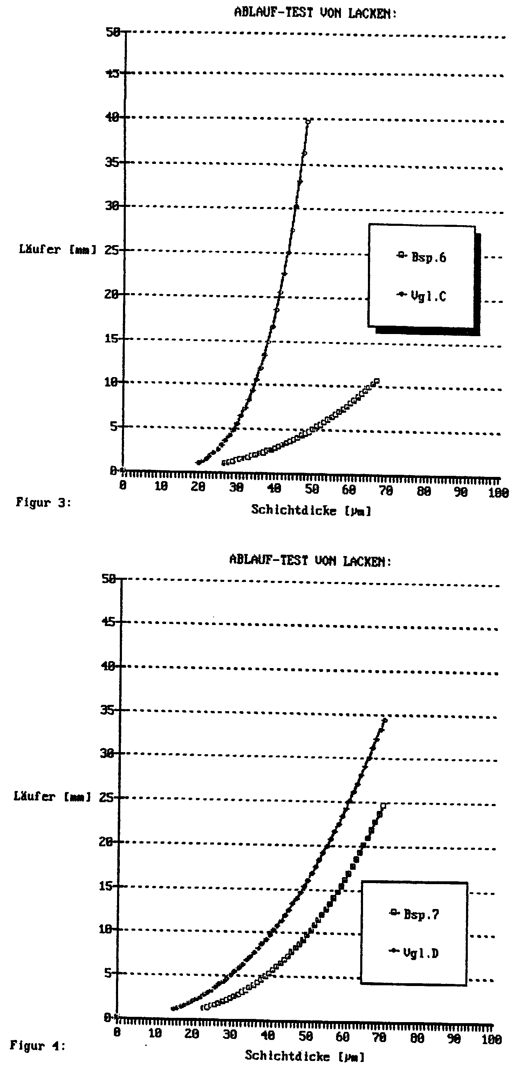

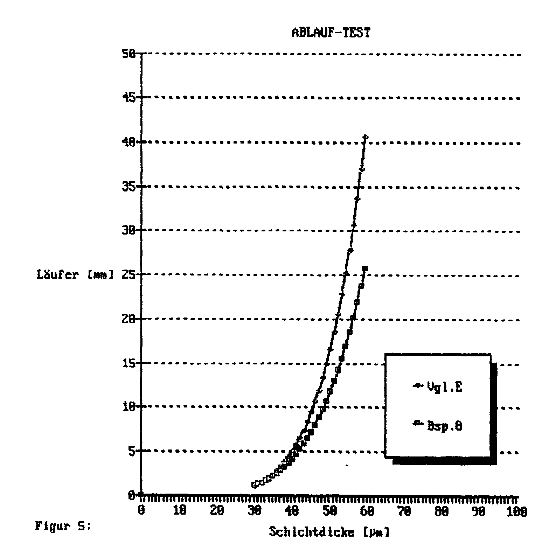

Die Lacke der Beispiele 4 bis 8, sowie der entsprechenden Vergleichsversuche A) bis E) wurden dem vorstehenden beschriebenen Ablauf-Test unterworfen. Die Ergebnisse sind in den beigefügten Figuren 1 bis 5 aufgeführt. In diesen Figuren wurde die Schichtdicke der erhaltenen Filme gegen die Länge der unerwünschten Läufer aufgetragen. Es zeigt sich, daß durch den erfindungsgemäßen Rheologie-Beeinflusser die Läuferbildung stark zurückgedrängt wird. Es zeigte sich, daß die optischen Eigenschaften (Glanz und Brillianz) der Lacke durch den Zusatz der erfindungsgemäßen Rheologie-Beeinflusser nicht beeinträchtigt wurden.

## Patentansprüche

1. Zusammensetzung, geeignet als Rheologie-Beeinflusser für Überzugsmittel, enthaltend ein Gemisch, das hergestellt wurde durch Vorlage von
B) einer hydroxyfunktionellen Mikrodispersion die dadurch hergestellt wurde, daß man eine Lösung von
a) 15 - 85 Gew.-% eines oder mehrerer filmbildender hydroxyl- und/oder carboxylgruppenhaltiger Polyester und/oder carboxylgruppenhaltiger (Meth)acryl-Copolymerisate, wobei bis zur Hälfte der Polyester und/oder (Meth)acryl-Copolymerisat Moleküle jeweils mit einem Molekül Maleinsäure oder Maleinsäurenanhydrid verestert sein kann, vorlegt, und in dieser Vorlage
b) 85 - 15 Gew.-% eines oder mehrerer radikalisch polymerisierbarer Monomerer auf der Basis von einem oder mehreren Hydroxylalkyl(meth)acrylaten, die im Gemisch mit einem oder mehreren anderen ungesättigten Monomeren vorliegen können, polymerisiert,
und Vermischen dieser Komponente B mit
A) einem oder mehreren hydroxylgruppenhaltigen (Meth)acryl-Copolymerisaten und/oder einem oder mehreren hydroxylgruppenhaltigen Polyestern, mit einer Hydroxylzahl von 30 - 200 mg KOH/g und einem Carboxylgruppengehalt entsprechend einer Säurezahl von 0 - 50 mg KOH/g,
und Umsetzung des Gemisches von A) und B) mit
C) 3 - 8 Gew.% eines oder mehrerer Diisocyanate und
D) 2 - 5 Gew.-% eines oder mehrerer aliphatischer primärer Monoamine, die im Gemisch mit einem Teil der Komponente A) oder des löslichen Anteils der Komponente B) vorliegen können,
wobei die Komponenten A) und B) in einem derartigen Anteil vermischt werden, daß die Menge der in den Komponenten A), B) und D) enthaltenen (Meth)acryl-Copolymerisate und/oder Polyester 57 bis 90 Gew.-% und die Menge der in B) enthaltenen Mikroteilchen 5 bis 30 Gew.-% entsprechen,
wobei sich die Gew.-% jeweils auf den Festkörpergehalt beziehen und die Summe der Komponenten A, B, C und D, sowie die Summe der Komponenten a) und b) jeweils 100 Gew.-% beträgt, und die Zusammensetzung außerdem Pigemente, Füllstoffe, lackübliche Additive und/oder Lösemittel enthalten kann.

2. Überzugsmittel, enthaltend eine Zusammensetzung gemäß Anspruch 1 als Rheologie-Beeinflusser, sowie ein oder mehrere hydroxyfunktionelle Bindemittel, neben einem oder mehreren Vernetzungsmitteln, sowie gegebenenfalls einem oder mehreren Pigmenten, Füllstoffen, lacküblichen Additiven und/oder Lösemitteln.

3. Zusammensetzung und Überzugsmittel nach Anspruch 1 oder 2, worin die radikalisch polymerisierbaren Monomeren der Komponente b) ein Gemisch sind von
b1) 80 - 100 Gew.-% eines oder mehrerer Hydroxyalkyl(meth)acrylate und
b2) 0 - 20 Gew.-% eines oder mehrerer anderer ungesättigter Monomerer.

4. Zusammensetzung und Überzugsmittel nach einem der Ansprüche 1 bis 3, worin die Komponente a) gänzlich oder teilweise der Komponente A entspricht.

5. Zusammensetzung und Überzugsmittel nach einem der vorhergehenden Ansprüche, worin als Komponente A ein oder mehrere (Meth)acryl-Copolymerisate eingesetzt werden, mit einer Säurezahl von 1 - 50 mg KOH/g, einer einer Hydroxylzahl von 30 - 200 mg KOH/g, einem Zahlenmittel des Molekulargewichts von 1500 - 30000 und einer Glasübergangstemperatur von - 20°C bis + 80°C.

6. Zusammensetzung und Überzugsmittel nach einem der vorhergehenden Ansprüche, worin als Komponente A ein oder mehrere Polyester eingesetzt werden, mit einer Säurezahl von 1 - 50 mg KOH/g, einer Hydroxylzahl von 30 - 200 mg KOH/g und einem Zahlenmittel des Molekulargewichts von 1000 - 6000.

7. Zusammensetzung und Überzugsmittel nach einem der vorhergehenden Ansprüche, worin als Komponente B eine hoch hydroxylgruppenhaltige Mikrodispersion eingesetzt wird, in der die Mikroteilchen eine Hydroxylzahl von mindestens 300 mg KOH/g, eine Säurezahl von 1 - 50 mg KOH/g und eine Teilchengröße von 50 - 800 nm aufweisen.

8. Zusammensetzung und Überzugsmittel nach einem der vorhergehenden Ansprüche, worin als Komponente C ein aromatisches Diisocyanat, insbesondere 2,4- und/oder 2,6-Toluylendiisocyanat eingesetzt wird.

9. Zusammensetzung und Überzugsmittel nach einem der vorhergehenden Ansprüche, worin als Komponente D ein aliphatisches primäres Monoamin mit 4 - 18 Kohlenstoffatomen im Molekül, insbesondere mit C₈-C₁₂ Kohlenstoffatomen im Molekül, eingesetzt wird.

10. Verfahren zur Herstellung einer Zusammensetzung gemäß einem der Ansprüche 1 und 2 bis 9, dadurch gekennzeichnet, daß man eine Lösung von
a) 15 - 85 Gew.-% eines oder mehrerer filmbildender hydroxyl- und/ oder carboxylgruppenhaltiger Polyester und/oder hydroxyl- und/oder carboxylgruppenhaltiger (Meth)acryl-Copolymerisate, wobei bis zur Hälfte der Polyester und/oder (Meth)acryl-Copolymerisat Moleküle jeweils mit einem Molekül Maleinsäure oder Maleinsäureanhydrid verestert sein kann, vorlegt, und in dieser Vorlage
b) 85 - 15 Gew.-% eines oder mehrerer radikalisch polymerisierbarer Monomerer auf der Basis von einem oder mehreren Hydroxylalkyl(meth)acrylaten, die im Gemisch mit einem oder mehreren anderen ungesättigten Monomeren vorliegen können, polymerisiert unter Bildung einer hydroxyfunktionellen Mikrodispersion B,
und daß man
die so erhaltene hydroxyfunktionelle Mikrodispersion (Komponente B) mit
einem derartigen Anteil von einem oder mehreren hydroxylgruppenhaltigen (Meth)acryl-Copolymerisaten und/oder einem oder mehreren hydroxylgruppenhaltigen Polyestern, mit einer Hydroxylzahl von 30 - 200 mg KOH/g und einem Carboxylgruppengehalt entsprechend einer Säurezahl von 0 - 50 mg KOH/g als Komponente A vermischt, daß die Menge der in den Komponenten A), B) und D) enthaltenen (Meth)acryl-Copolymerisate und/oder Polyester 57 bis 90 Gew.-% und die Menge der in B) enthaltenen Mikroteilchen 5 bis 30 Gew.-% entsprechen,
und mit dem so erhaltenen Gemisch
3 - 8 Gew.-% eines oder mehrerer Diisocyanate (Komponente C) und
2 - 5 Gew.-% eines oder mehrerer aliphatischer primärer Monoamine (Komponente D), gegebenenfalls im Gemisch mit einem Teil der Komponente A) oder des löslichen Anteils der Komponente B), umsetzt,
wobei sich die Gew.-% jeweils auf den Festkörpergehalt beziehen und die Summe der Komponenten A, B, C und D, sowie die Summe der Komponenten a) und b) jeweils 100 Gew.-% beträgt.

11. Verfahren nach Anspruch 10, dadurch gekennzeichnet, daß man als Komponente b) ein Gemisch aus
b1) 80 - 100 Gew.-% eines oder mehrerer Hydroxylalkyl(meth)acrylate und
b2) 0 - 20 Gew.-% eines oder mehrerer anderer ungesättigter Monomerer
verwendet.

12. Verfahren nach Anspruch 10 oder 11, dadurch gekennzeichnet, daß man zur Herstellung der Komponente a) ein oder mehrere hydroxylgruppenhaltige (Meth)acryl-copolymerisate und/oder einen oder mehrere hydroxylgruppenhaltige Polyester verwendet oder mitverwendet, wie sie für die Komponente A verwendet werden.

13. Verfahren zur Herstellung eines Überzugsmittels gemäß einem der Ansprüche 2 bis 9, dadurch gekennzeichnet, daß man eine Zusammensetzung, hergestellt nach dem Verfahren eines der Ansprüche 10 bis 12, mit einem oder mehreren hydroxyfunktionellen Bindemitteln, einem oder mehreren Vernetzungsmitteln, sowie gegebenenfalls einem oder mehreren Pigmenten, Füllstoffen, lacküblichen Additiven und/oder Lösemitteln vermischt.

14. Verfahren nach Anspruch 13, dadurch gekennzeichnet, daß man Überzugsmittel herstellt, die 5 - 60 Gew.-% der Zusammensetzung, hergestellt nach dem Verfahren eines der Ansprüche 10 bis 13, enthalten.

15. Verwendung der Zusammensetzungen nach einem der Ansprüche 1 und 3 bis 9 als Rheologie-Beeinflusser zur Herstellung ablaufsicherer pigmentierter und nicht-pigmentierter Überzugsmittel.

16. Verwendung nach Anspruch 15 zur Herstellung von Überzugsmitteln, die 5 - 60 Gew.-% der Zusammensetzung enthalten.

## Claims

1. A composition, suitable for use as a rheological additive for surface coatings, comprising a mixture which is prepared by providing an initial amount of
B) a hydroxyfunctional microdispersion, prepared in that a solution of
a) 15 - 85 wt.% of one or more film-forming hydroxyl and/or carboxyl group-containing polyesters and/or carboxyl group-containing (meth)acrylic copolymers, wherein up to half of the polyester and/or (meth)acrylic copolymer molecules may be esterified with a molecule of maleic acid or maleic anhydride, is provided as an initial amount, in which
b) 85 - 15 wt.% of one or more radically polymerisable monomers based on one or more hydroxylalkyl (meth)acrylates, which may be present in a mixture with one or more other unsaturated monomers, is polymerised,
this component B being mixed with
A) one or more hydroxyl group-containing (meth)acrylic copolymers and/or one or more hydroxyl group-containing polyesters, with a hydroxyl value of 30 - 200 mg KOH/g and a carboxyl group content corresponding to an acid value of 0 - 50 mg KOH/g, and the mixture of A) and B) being reacted with
C) 3 - 8 wt.% of one or more diisocyanates and
D) 2 - 5 wt.% of one or more aliphatic primary monoamines, which may be present in a mixture with part of component A) or the soluble portion of component B),
wherein the components A) and B) are mixed in such proportions that the amount of the (meth)acrylic copolymers and/or polyesters contained in the components A), B) and D) corresponds to from 57 to 90 wt.% and the amount of the microparticles contained in B) corresponds to from 5 to 30 wt.%,
wherein the weight percentages are each based on the solids content and the sum of the components A, B, C and D, and the sum of the components a) and b) each amounts to 100 wt.%, and the composition may additionally contain pigments, fillers, additives conventionally used in coating technology and/or solvents.

2. A surface coating, containing a composition according to claim 1 acting as a rheological additive, as well as one or more hydroxyfunctional binders in addition to one or more cross-linking agents and optionally one or more pigments, fillers, additives conventionally used in coating technology and/or solvents.

3. A composition and surface coating according to claim 1 or claim 2, wherein the radically polymerisable monomers of component b) are a mixture of
b1) 80 - 100 wt.% of one or more hydroxyalkyl (meth)acrylates and
b2) 0 - 20 wt.% of one or more other unsaturated monomers.

4. A composition and surface coating according to any one of claims 1 to 3, wherein component a) corresponds wholly or partially to component A.

5. A composition and surface coating according to any one of the preceding claims, wherein one or more (meth)acrylic copolymers are used as component A, with an acid value of 1 - 50 mg KOH/g, a hydroxyl value of 30 - 200 mg KOH/g, a number average molecular weight of 1500 - 30000 and a glass transition temperature of from -20°C to +80°C.

6. A composition and surface coating according to any one of the preceding claims, wherein one or more polyesters are used as component A, with an acid value of 1 - 50 mg KOH/g, a hydroxyl value of 30 - 200 mg KOH/g and a number average molecular weight of 1000 - 6000.

7. A composition and surface coating according to any one of the preceding claims, wherein a microdispersion with an elevated hydroxyl group content is used, in which the microparticles exhibit a hydroxyl value of at least 300 mg KOH/g, an acid value of 1 - 50 mg KOH/g and a particle size of 50 - 800 nm.

8. A composition and surface coating according to any one of the preceding claims, wherein an aromatic diisocyanate, in particular 2,4- and/or 2,6-toluylene diisocyanate, is used as component C.

9. A composition and surface coating according to any one of the preceding claims, wherein an aliphatic primary monoamine with 4 - 18 carbon atoms per molecule, in particular C₈ - C₁₂ carbon atoms per molecule, is used as component D.

10. A process for preparing a composition according to any one of claims 1 and 2 to 9, characterised in that a solution of
a) 15 - 85 wt.% of one or more film-forming hydroxyl and/or carboxyl group-containing polyesters and/or hydroxyl and/or carboxyl group-containing (meth)acrylic copolymers, wherein up to half of the polyester and/or (meth)acrylic copolymer molecules may be esterified with a molecule of maleic acid or maleic anhydride, is provided as an initial amount, in which
b) 85 - 15 wt.% of one or more radically polymerisable monomers based on one or more hydroxylalkyl (meth)acrylates, which may be present in a mixture with one or more other unsaturated monomers, is polymerised to form a hydroxyfunctional microdispersion B,
and in that
the hydroxyfunctional microdispersion thus obtained (component B) is mixed with
such an amount of one or more hydroxyl group-containing (meth)acrylic copolymers and/or one or more hydroxyl group-containing polyesters, with a hydroxyl value of 30 - 200 mg KOH/g and a carboxyl group content corresponding to an acid value of 0 - 50 mg KOH/g, as component A, that the amount of the (meth)acrylic copolymers and/or polyesters contained in components A), B) and D) corresponds to from 57 to 90 wt.% and the amount of the microparticles contained in B) corresponds to from 5 to 30 wt.%,
and the mixture thus obtained is reacted with
3 - 8 wt.% of one or more diisocyanates (component C) and
2 - 5 wt.% of one or more aliphatic primary monoamines (component D), optionally in a mixture with part of component A) or the soluble portion of component B),
wherein the weight percentages are each based on the solids content and the sum of the components A, B, C and D and the sum of the components a) and b) each amount to 100 wt.%.

11. A process according to claim 10, characterised in that a mixture of
b1) 80 - 100 wt.% of one or more hydroxylalkyl (meth)acrylates and
b) 0 - 20 wt.% of one or more other unsaturated monomers
is used as component b).

12. A process according to claim 10 or claim 11, characterised in that one or more hydroxyl group-containing (meth)acrylic copolymers and/or one or more hydroxyl group-containing polyesters, as used for component A, are used or co-used to prepare component a).

13. A process for preparing a surface coating according to any one of claims 2 to 9, characterised in that a composition, prepared by the process of any one of claims 10 to 12, is mixed with one or more hydroxyfunctional binders and one or more cross-linking agents as well, optionally, as one or more pigments, fillers, additives conventionally used in coating technology and/or solvents.

14. A process according to claim 13, characterised in that surface coatings are prepared which contain 5 - 60 wt.% of the composition, prepared according to the process of any one of claims 10 to 13.

15. Use of the compositions according to any one of claims 1 and 3 to 9 as a rheological additive for the preparation of sag-resistant pigmented and unpigmented surface coatings.

16. Use according to claim 15 to prepare surface coatings which contain from 5 - 60 wt.% of the composition.

## Revendications

1. Composition, appropriée comme agent modifiant la rhéologie pour matériaux de revêtement, contenant un mélange qui a été préparé en utilisant
B) une microdispersion à fonctionnalité hydroxy qui a été préparée en utilisant une solution de
a) 15 - 85% en poids d'un ou de plusieurs polyesters contenant des groupes hydroxyle ou carboxyle et/ou des copolymérisats (méth)-acryliques contenant des groupes carboxyle filmogènes, dans lesquels jusqu'à la moitié des molécules de polyester et/ou de copolymérisat (méth)acrylique peut être respectivement estérifiée avec une molécule d'acide maléique ou d'anhydride maléique, et en polymérisant dans cette préparation
b) 85 - 15% en poids d'un ou de plusieurs monomères polymérisables par polymérisation radicalaire à base d'un ou de plusieurs (méth)acrylates d'hydroxyalkyle, qui peuvent être utilisés en mélange avec un ou plusieurs autres monomères insaturés,
et mélange de ce composant B avec
A) un ou plusieurs composés de copolymérisation (méth)acryliques contenant des groupes hydroxyle et/ou un ou plusieurs polyesters contenant des groupes hydroxyle, avec un indice d'hydroxyle de 30 - 200 mg KOH/g et une teneur en groupes carboxyle correspondant à un indice d'acide de O - 50 mg KOH/g,
et réaction du mélange de A) et B) avec
C) 3 - 8% en poids d'un ou de plusieurs diisocyanates et
D) 2 - 5% en poids d'une ou de plusieurs monoamines primaires aliphatiques, qui peuvent se présenter en mélange avec une partie du composant A) ou de la partie soluble du composant B),
dans laquelle les composants A) et B) sont mélangés dans une proportion telle que la quantité des copolymérisats (méth)acryliques et/ou des polyesters contenus dans les composants A), B) et D) correspondent à 57 à 90% en poids et la quantité de microparticules contenues dans B) à 5 à 30% en poids,
dans laquelle les % en poids se rapportent respectivement à la teneur en extraits secs et la somme des composants A, B, C et D, ainsi que la somme des composants a) et b) représente respectivement 100% en poids, et la composition peut contenir en outre des pigments, des charges, des additifs usuels des peintures et/ou des solvants.

2. Matériau de revêtement, contenant une composition selon la revendication 1 comme agent modifiant la rhéologie, ainsi qu'un ou plusieurs liants à fonctionnalité hydroxy, en plus d'un ou de plusieurs agents de réticulation, et éventuellement d'un ou de plusieurs pigments, charges, additifs usuels des peintures et/ou solvants.

3. Composition et matériau de revêtement selon la revendication 1 ou 2, dans lesquels les monomères polymérisables par polymérisation radicalaire du composant b) sont un mélange de
b1) 80 - 100% en poids d'un ou de plusieurs (méth)-acrylate d'hydroxyalkyle
b2) 0 - 20% en poids d'un ou de plusieurs autres monomères insaturés.

4. Composition et matériau de revêtement selon l'une des revendications 1 à 3, dans lesquels le composant a) correspond totalement ou partiellement au composant A.

5. Composition et matériau de revêtement selon l'une des revendications précédentes, dans lesquels on utilise comme composant A un ou plusieurs copolymérisats (méth)acryliques avec un indice d'acide de 1 - 50 mg KOH/g, un indice d'hydroxyle de 30 - 200 mg KOH/g, une moyenne en nombre de la masse moléculaire de 1500 - 30000 et une température de transition vitreuse de -20°C à +80°C.

6. Composition et matériau de revêtement selon l'une des revendications précédentes, dans lesquels on utilise comme composant A un ou plusieurs polyesters, avec un indice d'acide de 1 - 50 mg KOH/g, un indice d'hydroxyle de 30 - 200 mg KOH/g, une moyenne en nombre de la masse moléculaire de 1000 - 6000.

7. Composition et matériau de revêtement selon l'une des revendications précédentes, dans lesquels on utilise comme composant B une microdispersion à forte teneur en groupes hydroxyle, dans laquelle les microparticules présentent un indice d'hydroxyle d'au moins 300 mg KOH/g, un indice d'acide de 1 - 50 mg KOH/g et un taille de particules de 50 - 800 nm.

8. Composition et matériau de revêtement selon l'une des revendications précédentes, dans lesquels on utilise comme composant C un diisocyanate aromatique, en particulier le diisocyanate de 2,4- et/ou de 2,6-toluylène.

9. Composition et matériau de revêtement selon l'une des revendications précédentes, dans lesquels on utilise comme composant D une monoamine aliphatique primaire avec 4 - 18 atomes de carbone dans la molécule, en particulier avec une molécule en C₈-C₁₂.

10. Procédé de préparation d'une composition selon l'une des revendications 1 et 2 à 9, caractérisé en ce qu'on utilise une solution de
a) 15 - 85% en poids d'un ou de plusieurs polyesters contenant des groupes hydroxyle et/ou carboxyle et/ou des copolymérisats (méth)-acryliques contenant des groupes hydroxyle et/ou carboxyle filmogènes, dans lesquels jusqu'à la moitié des molécules de polyester et/ou de copolymérisat (méth)acrylique peut être respectivement estérifiée avec une molécule d'acide maléique ou d'anhydride maléique, et en polymérisant dans cette préparation
b) 85 - 15% en poids d'un ou de plusieurs monomères polymérisables par polymérisation radicalaire à base d'un ou de plusieurs (méth)acrylates d'hydroxyalkyle, qui peuvent être utilisés en mélange avec un ou plusieurs autres monomères insaturés, en formant une microdispersion B à fonctionnalité hydroxy,
et en ce qu'on
mélange la microdispersion à fonctionnalité hydroxy ainsi obtenue (composant B) avec
une teneur telle d'un ou de plusieurs composés de copolymérisation (méth)acryliques contenant des groupes hydroxyle et/ou d'un ou de plusieurs polyesters contenant des groupes hydroxyle, avec un indice d'hydroxyle de 30 - 200 mg KOH/g et une teneur en groupes carboxyle correspondant à un indice d'acide de 0 - 50 mg KOH/g, comme composant A, que la quantité des copolymérisats (méth)acryliques et/ou des polyesters contenus dans les composants A), B) et D) correspond à 57 à 90% en poids et la quantité des microparticules contenues dans B) à 5 à 30% en poids,
met à réagir avec le mélange ainsi obtenu
3 - 8% en poids d'un ou de plusieurs diisocyanates (composant C) et
2 - 5% en poids d'une ou de plusieurs monoamines aliphatiques primaires (composant D), éventuellement en mélange avec une partie du composant A) ou de la partie soluble du composant B),
dans lequel les % en poids se rapportent respectivement à la teneur en extraits secs et la somme des composants A, B, C et D, ainsi que la somme des composants a) et b) représente respectivement 100% en poids.

11. Procédé selon la revendication 10, caractérisé en ce qu'on utilise comme composant b) un mélange de
b1) 80 - 100% en poids d'un ou de plusieurs (méth)acrylates d'hydroxyalkyle et
b2) 0 - 20% en poids d'un ou de plusieurs autres monomères insaturés.

12. Procédé selon la revendication 10 ou 11, caractérisé en ce qu'on utilise pour la préparation du composant a) un ou plusieurs copolymérisats (méth)acryliques contenant des groupes hydroxyle et/ou un ou plusieurs polyesters contenant des groupes hydroxyle, ou on les utilise ensemble, comme ils sont utilisés pour le composant A.

13. Procédé de préparation d'un matériau de revêtement selon l'une des revendications 2 à 9, caractérisé en ce qu'on mélange une composition, préparée selon le procédé d'une des revendications 10 à 12, avec un ou plusieurs liants à fonctionnalité hydroxy, un ou plusieurs agents réticulants, ainsi qu'éventuellement un ou plusieurs pigments, charges, additifs usuels des peintures et/ou solvants.

14. Procédé selon la revendication 13, caractérisé en ce qu'on prépare des matériaux de revêtement qui contiennent 5 - 60% en poids de la composition, préparée selon le procédé de l'une des revendications 10 à 13.

15. Utilisation des compositions selon l'une des revendications 1 et 3 à 9 comme agent modifiant la rhéologie pour la préparation de matériaux de revêtement pigmentés et non pigmentés avec plus de sécurité d'écoulement.

16. Utilisation selon la revendication 15 pour la préparation de matériaux de revêtement, qui contiennent 5 - 60% en poids de la composition.
